# EUROPEAN PATENT APPLICATION

(11) **EP 2 284 672 A2**
(43) Date of publication of application: **16.02.2011**
(21) Application number: 10171048.1
(22) Date of filing: 28.07.2010
(51) Int. Cl.: G06F 3/048

(54) **Method and apparatus for displaying letters on touch screen of terminal**

(30) Priority: 10.08.2009 KR 20090073217
(71) Applicant: SAMSUNG ELECTRONICS CO., LTD., Suwon-si, Gyeonggi-do (KR)
(72) Inventor: Cho, Sung Pil, Gyeonngi-do (KR)
(74) Representative: Jenkins, Richard Gavin

(57) **Abstract**

A method and apparatus for displaying letters and images on a touch screen of a terminal is disclosed. When a region on the touch screen is designated, in a block, according to a touch from a user, the at least one of letters and images contained in the designated block are displayed on an area in the touch screen, as a pop up screen. Thereby, users are able to more easily recognize the at least one of the letters and images currently designated by the block.

## Description

### BACKGROUND OF THE INVENTION

### 1. Field of the Invention:

The present invention relates to a terminal. More particularly, the present invention relates to a method and apparatus that designates letters and images, designated by a block, on a touch screen of a terminal, via a drag motion, and displays them on a pop-up screen.

### 2. Description of the Related Art:

A touch screen of a terminal has a touch pad on a display window. In recent years, touch screens have been applied to various types of terminals, for example, a Personal Digital Assistant (PDA), a navigation system, a Point-Of-Sale (POS) device, an Automatic Teller Machine (ATM), a Portable Multimedia Player (PMP), a mobile communication terminal, etc. In general, touch screens are operated via a Graphic User Interface (GUI). These terminals employ touch screens as an input device because it allows users to easily input letters or select a menu. In addition, touch screens can reduce the volume of the terminals because they can replace a separate input device.

When a user inputs a letter repeatedly during the letter inputting process, the user operates a block designating function of the terminal. That is, the user designates the letter repeatedly input with a block, copies and pastes it.

However, the conventional block designating function is conducted in such a way that a letter is selected by a block according to a user's drag motion and then displayed with a highlighting. In this case, the screen may be covered by a user's finger that is designating a corresponding letter in a block, which makes it difficult for the user to recognize which part of the letters the user has designated in a block. That is, the user has difficulty ascertaining the letters currently being designated in a block.

### SUMMARY OF THE INVENTION

An aspect of the present invention is to address at least the above-mentioned problems and/or disadvantages and to provide at least the advantages described below. Accordingly, an aspect of the present invention is to provide a method and apparatus that designates at least one of the letters and images in a certain region on a touch screen of a terminal, in a block, according to a user's touch, and displays it on a pop-up screen.

Another aspect of the present invention is to provide a method and apparatus that displays a corresponding letter and image on a pop-up screen when a user designates it, thereby allowing the user to recognize a letter and image currently designated in a block, where the pop-up screen is displayed on a touch screen of a terminal.

Still another aspect of the present invention is to provide a method and apparatus that senses the direction and distance of a drag when a user designates a block by a drag motion, identifies a letter and an image contained in the block, and displays the designated letter and image on a pop-up screen that is part of an area on which a virtual keypad is displayed, where the pop-up screen is displayed on a touch screen of a terminal.

Yet another aspect of the present invention is to provide a method and apparatus that displays letters currently designated in a block on a pop-up screen overlaying part of an area that can display letters, where the pop-up screen is displayed on a touch screen of a terminal.

In accordance with an aspect of the present invention, a method for displaying letters on a touch screen of a terminal is provided. The method includes designating a region on the touch screen, in a block, according to a touch from a user, and displaying at least one of letters and images, contained in the designated block, on an area in the touch screen, as a pop-up screen.

In accordance with another aspect of the present invention, an apparatus for displaying letters on a touch screen of a terminal is provided. The apparatus includes a touch screen and a controller. The touch screen includes a display window for displaying a region designated in a block, as a pop-up screen, and a touch pad for detecting a drag motion according to a touch from a user. The controller performs a control operation to display at least one of letters and images, contained in the designated block, on an area in the touch screen, as the pop-up screen.

In accordance with still another aspect of the present invention, a computer program product comprising a computer readable recording medium having computer readable program code stored therein for causing an electronic processor to display letters on a touch screen of a terminal is provided. The computer readable program code comprises a first computer readable program code for causing the computer to designate a region on the touch screen, in a block, according to a touch from a user. The computer readable program code comprises a second computer readable program code for causing the computer to display at least one of letters and images, contained in the designated block, on an area in the touch screen, as a pop-up screen.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a schematic block diagram illustrating a terminal with a touch screen according to an exemplary embodiment of the present invention;

FIG. 2 is a flowchart of a method for displaying letters of a terminal with a touch screen according to an exemplary embodiment of the present invention;

FIG. 3 is a flowchart of a method for displaying letters of a terminal with a touch screen according to an exemplary embodiment of the present invention;

FIG. 4A to FIG. 4D are views of an operation for displaying a letter when a drag motion is conducted to the right on a touch screen of a terminal according to an exemplary embodiment of the present invention; and

FIG. 5A to FIG. 5D are views of an operation for displaying a letter when a drag motion is conducted to the left on a touch screen of a terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, detailed descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

A terminal according to an exemplary embodiment of the present invention is described herein based on a portable terminal. However, it should be understood that the present invention is not limited to this exemplary embodiment. It will be appreciated that the terminal can be applied to all information communication devices, multimedia devices, and their applications, if they are equipped with a touch screen, for example, a Personal Digital Assistant (PDA), a smart phone, an International Mobile Telecommunication 2000 (IMT-2000) terminal, a Code Division Multiple Access (CDMA) terminal, a Wideband Code Division Multiple Access (WCDMA) terminal, a Global System for Mobile communication (GSM) terminal, a Universal Mobile Telecommunication Service (UMTS), a laptop computer, etc.

In the following description, the term 'touch' refers to an action where a user's finger contacts a touch screen. The term 'drag' refers to an action where a user's finger contacts and moves on the touch screen. The term 'drop' refers to an action where a user's finger is removed from the touch screen.

The term 'block' refers to a set containing at least one of the letters and images on the touch screen, selected by a drag motion. The 'block' serves to designate letters and images, displayed on the touch screen, according to the direction and distance of the drag motion and is shown by a 'rectangular box.' In the following description, for the sake of convenience, the letters and images designated by and contained in a block according to a drag motion are referred to as 'letters' as a representative term.

The term 'pop-up screen' refers to a pop-up screen that corresponds to the block described above, being displayed as a translucent screen on one side of the touch screen. The pop-up screen may also be displayed on part of an area on which a virtual keypad for inputting letters is displayed, where the virtual keypad is a type of application for inputting letters and activated according to an operation. The pop-up screen may also be overlaid and displayed on part of a window for displaying letters, where the window for displaying letters serves as a letter input window.

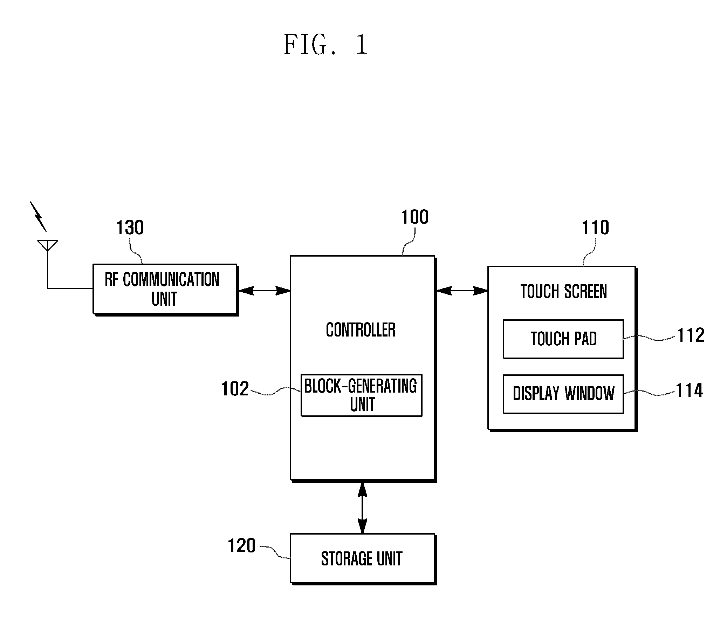

FIG. 1 is a schematic block diagram illustrating a terminal with a touch screen according to an exemplary embodiment of the present invention.

Referring to FIG. 1, the terminal includes a touch screen 110, a storage unit 120, a Radio Frequency (RF) communication unit 130, and a controller 100.

The touch screen 110 includes a display window 114 and a touch pad 112 placed on one side of the display window 114.

The display window 114 displays a variety of menus for the terminal and information provided to or input by a user. In an exemplary embodiment of the present invention, the display window 114 may be implemented with a Liquid Crystal Display (LCD) and includes the touch pad 112 attached to one side thereof. It should be understood that the present invention is not limited to this exemplary embodiment. For example, the display window 114 may also be implemented with a Cathode-Ray Tube (CRT), an Organic Light Emitting Diode (OLED), a Plasma Display Panel (PDP), their application, etc., if they can be configured to include a touch pad 112 placed to one side thereof. The display window 114 can also display a virtual keypad for inputting letters. The virtual keypad may be a QWERTY keypad. When a user's touch occurs on a particular key, a concentric circle is displayed to distinguish a letter thereon from others on other keys. The display window 114 displays a pop-up screen corresponding to a block designated according to a user's drag motion.

The touch pad 112 senses when a touch has occurred on the surface thereof and detects a coordinate where the touch has occurred, i.e., a touch position value. The touch pad 112 can be implemented with a resistive or capacitive touch screen. In an exemplary embodiment of the present invention, the touch pad 112 senses a user's touch and outputs a signal corresponding to the touch position to the controller 100. The touch pad 112 also senses a drag motion and outputs a corresponding signal to the controller 100.

The storage unit 120 stores programs for operating the terminal, user data, etc. The storage unit 120 is configured to include a program storage area and a data storage area. The program storage area stores an Operating System (OS) for booting the terminal, a program for controlling the operation of the terminal, application programs for supporting a variety of functions, etc. In an exemplary embodiment of the present invention, the program storage area stores an application program that can process events of touches that occur on the touch screen 110 and can detect the direction and distance of a drag motion. The data storage area stores data generated as the terminal is operated. In an exemplary embodiment of the present invention, the data storage area stores letters contained in a block that is designated by the direction and distance of a drag motion on the touch screen 110.

The RF communication unit 130 allows the terminal to perform wireless communication with other external terminals. The RF communication unit 130 includes an RF transmitter for up-converting the frequency of signals to be transmitted and amplifying the signals and an RF receiver for low-noise amplifying received RF signals and down-converting the frequency of the received RF signals.

The controller 100 controls operations of the terminal and also the signal flow among the elements therein, and performs the data processing operation. In an exemplary embodiment of the present invention, the controller 100 designates a certain region, in a block, according to the direction and distance of a drag motion at a position where a user's touch has occurred on the touch screen 110. The controller 100 displays at least one of letters and images, contained in the block, on a particular area on which a user's touch does not occur, as a pop-up screen.

The controller 100 designates a corresponding letter, in a block, according to a drag motion in a letter input mode while an application for inputting letters is being executed, and displays the letter on a pop-up screen. Examples of the application are a text message application, a memo application, an email application, a text editor application, etc.

When an application for inputting letters is executed, the controller 100 displays a letter input window on the touch screen 110. The letter input window displays letters input via the virtual keypad. To this end, when the application is executed, the controller 100 displays the virtual keypad on the screen.

The controller 100 identifies letters corresponding to positions based on touch signals that are generated according to the user's touch that is input into the letter input window and detects the direction and distance of the drag motion. The controller 100 designates letters in a block according to the direction and distance of the drag motion. The controller 100 displays the letters contained in the block on a translucent pop-up screen on one side of the touch screen 110. The controller 100 can also display the pop-up screen on part of an area where the virtual keypad is displayed. The controller 100 can also overlay and display the pop-up screen on part of the letter input window. The pop-up screen may be placed and displayed at a place, without being superimposed on the letter input window.

The controller 100 may further include a block-generating unit 102 to designate a block. The block-generating unit 102 detects the direction and distance of a drag motion and designates letters in a block corresponding thereto. For example, if the drag motion is conducted to the right from a certain position, forming a block, the block-generating unit 102 can sequentially designate letters by increasing the block. Likewise, if the drag motion is conducted to the left from a certain position, forming a block, the block-generating unit 102 can sequentially designate letters by increasing the block.

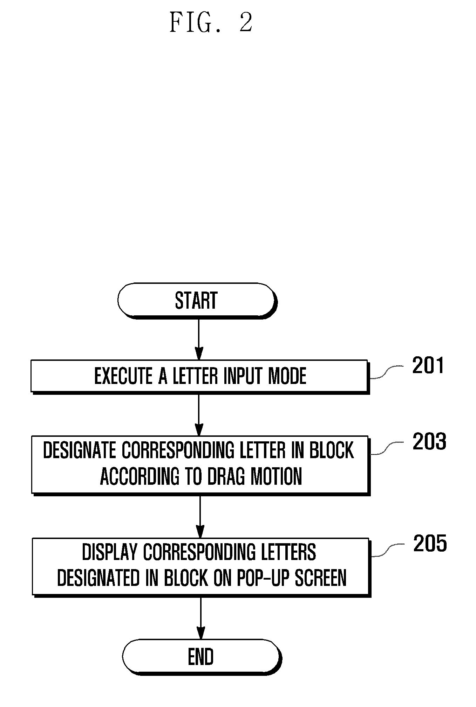

FIG. 2 is a flowchart of a method for displaying letters of a terminal with a touch screen according to an exemplary embodiment of the present invention.

Referring to FIG. 2, an application for inputting letters via the touch screen 110 allows a user to designate letters displayed in the letter input window in a block according to the user's drag motion, and displays the designated letters on a translucent pop-up screen on the touch screen 110. That is, the terminal executes a letter input mode where the letter input window is displayed on the touch screen 110 in step 201. The letter input window displays letters input by the user. During the letter input mode, the application for inputting letters can be executed. Examples of the application are a text message application, a memo application, an email application, a text editor application, etc.

The terminal can sense a user's touch in the letter input mode. When the touch occurs, the terminal detects a letter at the touch position and displays a cursor thereat. That is, the terminal can show a cursor at the position where a touch has occurred. After that, the terminal determines whether a drag motion occurs. If the terminal ascertains that a drag motion has occurred, it detects the direction and distance of the drag motion. The direction of the drag motion refers to a certain direction from a position where a user's touch first occurred to the left or right.

After detecting the direction and distance of the drag motion, the terminal designates letters in a block according thereto in step 203. That is, if the drag motion is being conducted to the right from a certain position, the terminal sequentially designates part of the letters displayed in the letter input window, in a block formed according to the drag motion. Likewise, if the drag motion is being conducted to the left from a certain position, the terminal sequentially designates part of the letters displayed in the letter input window, in a block formed according to the drag motion.

After that, the terminal displays the letters contained in the block on a translucent pop-up screen on the touch screen 110 in step 205. The terminal can display the pop-up screen on part of an area where a virtual keypad is displayed. The terminal can also overlay and display the pop-up screen on part of the letter input window. In that case, the pop-up screen is placed and displayed at one side of the touch screen 110, so that the user can easily recognize the letters designated in a block, displayed on the pop-up screen, distinguished from the letter input window.

In an exemplary embodiment of the present invention, the terminal designates a certain region on the touch screen 110, in a block, according to the direction and distance of the drag motion from a position where a user's touch has occurred. The terminal can display at least one of the letters and images contained in the block on a particular area where the user's touch has not occurred, as a pop-up screen.

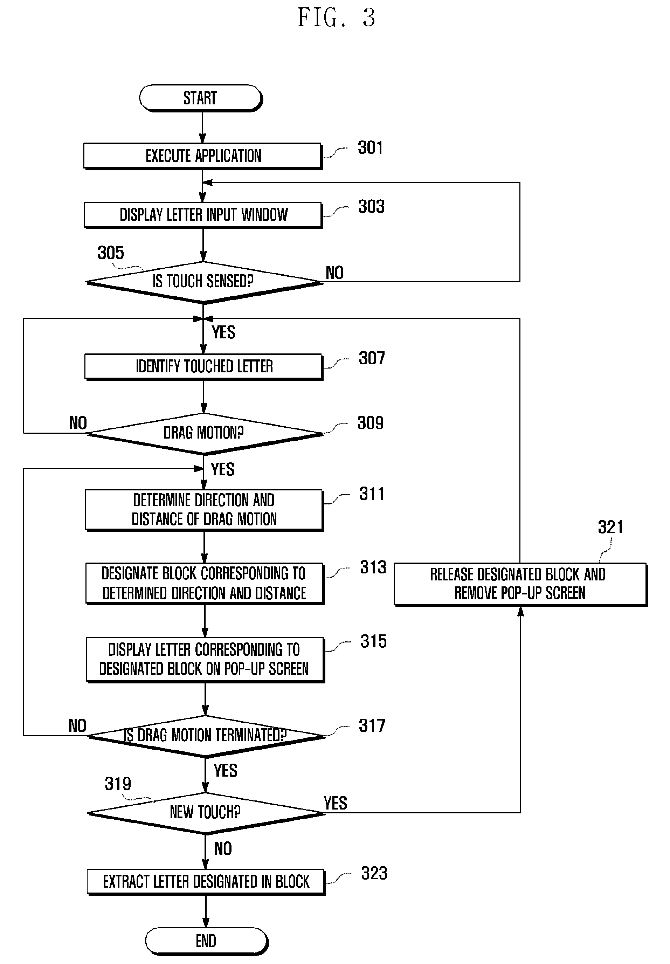

FIG. 3 is a flowchart of a method for displaying letters of a terminal with a touch screen according to an exemplary embodiment of the present invention.

Referring to FIG. 3, the terminal with a touch screen designates letters displayed on the letter input window, in a block, according to the direction and distance of the drag motion, and displays the letters on a pop-up screen.

The controller 100 executes an application for inputting letters according to a user's request in step 301. The application allows letters to be input via the virtual keypad displayed on the touch screen 110 in the letter input mode. Examples of the application are a text message application, a memo application, an email application, a text editor application, etc.

When the application is executed at step 301, the controller 100 displays a letter input window in step 303. The letter input window is displayed on one side of the touch screen 110 and displays letters input by the user. The controller 100 can display letters, sensed on the touch screen 110 according to a user's input, on the letter input window.

When the letters are input in the letter input window at step 303, the controller 100 determines whether a user's touch is sensed on the touch screen 110 in step 305. That is, the controller 100 can detect a user's touch to designate letters displayed on the letter input window, in a block. If the controller 100 senses a user's touch at step 305, it identifies a letter at a position where the user's touch has occurred in step 307. After that, the controller 100 displays a cursor at the position of the touched letter. If the controller 100 does not sense a user's touch at step 305, it returns to and proceeds with step 303.

When the controller 100 has identified the touched letter at step 307, it determines whether a drag motion occurs according to a user's input in step 309. If the controller 100 ascertains that the drag motion has occurred at step 309, it detects the direction and distance of the drag motion in step 311) That is, the controller 100 can detect the direction and distance of the drag motion by detecting a user's touch corresponding to the movement toward a direction, for example, to the left or right, from a position where a user's touch has first occurred.

In contrast, if the controller 100 ascertains that the drag motion has not occurred at step 309, the controller 100 returns to and proceeds with steps 307 and 309 where it identifies the first touched letter, displays a cursor on a corresponding position, and determines whether a drag motion occurs.

When the direction and distance of the drag motion has been detected at step 311, the controller 100 designates letters, in a block, according thereto in step 313. If the drag motion is conducted to the right from a certain position, forming a block, the controller 100 can sequentially designate letters by extending the block. Likewise, if the drag motion is conducted to the left from a certain position, forming a block, the controller 100 can sequentially designate letters by extending the block.

When the letters are designated by the block at step 313, the controller 100 displays the letters designated in a block on a translucent pop-up screen in step 315. The controller 100 makes the pop-up screen translucent in order to display the pop-up screen on an area where a user' touch has not occurred. The pop-up screen contains letters designated by the block and is displayed on one side of the touch screen 110.

After that, the controller 100 determines whether a drag motion is terminated in step 317. If the controller 100 ascertains that a drag motion has not been terminated at step 317, it returns to and proceeds with step 311 where it detects the direction and distance of the drag motion and designates a block.

In contrast, if the controller 100 ascertains that a drag motion has been terminated at step 317, for example, if a drop event has occurred, it determines whether a new user's touch, for example, a user's touch for designating another block, is input in step 319. During this process, the controller 100 displays the letters, currently designated by the block until the new user's touch is input, on the touch screen 110.

If the controller 100 ascertains that a new user's touch has been input at step 319, it releases the designated block and removes the pop-up screen displayed on one side of the touch screen 110 in step 321. After that, the controller 100 returns to and proceeds with step 307 where it identifies a letter at a position where the new user's touch has occurred. On the contrary, if the controller 100 ascertains that a new user's touch has not been sensed at step 319, it can extract letters designated by the block in step 323. The extracted letters are stored in the storage unit 120 or displayed on the letter input window by a copying and pasting operation.

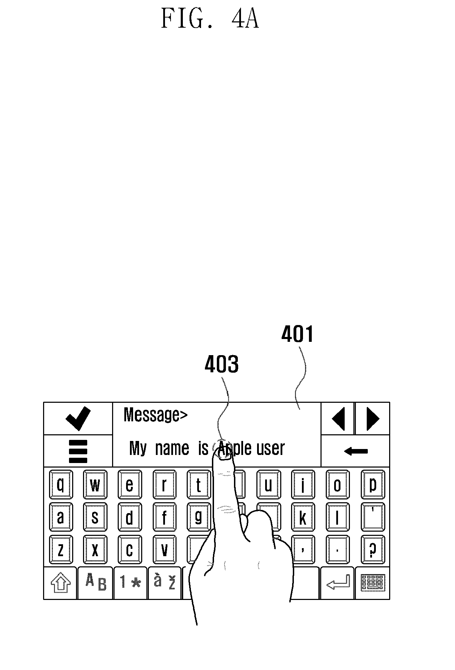

FIG. 4A to FIG. 4D are views of an operation for displaying a letter when a drag motion is conducted to the right on a touch screen of a terminal according to an exemplary embodiment of the present invention.

Referring to FIGs. 4A to 4D, it is assumed that a drag motion is conducted to the right from a position where a user's touch has first occurred on the touch screen of the terminal.

As shown in FIG. 4A, the controller 100 displays a letter input window 401 according to an application for inputting letters via the touch screen 110. The controller 100 can sense a user' touch input to the letter input window 401. The controller 100 detects a position 403 where the user's touch has occurred and identifies a corresponding letter.

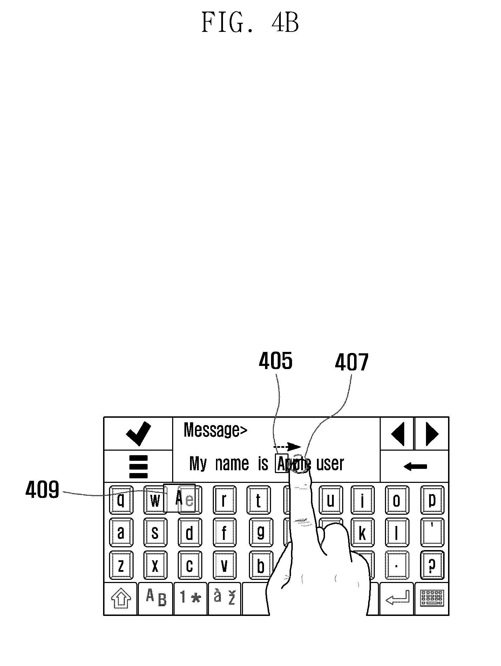

When the controller 100 detects the position where the user's touch has occurred, it determines whether a drag motion occurs. If a drag motion has occurred, the controller 100 designates letters in a block according to the direction and distance of the drag motion. For example, as shown in FIG. 4B, if the controller 100 ascertains that a drag motion has occurred, it detects that the drag motion is occurring to the right from the position 403 where a user's touch first occurred. Simultaneously, the controller 100 detects the distance of the drag motion and designates letter 'A', in block 405, according to the user's finger position 407 during the drag motion. The controller 100 can also display letter 'A' designated by the block 405 on a pop-up screen 409 on one side of the touch screen 110.

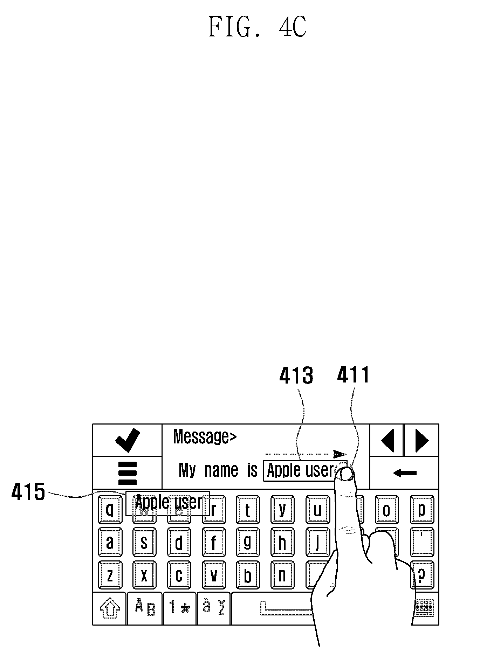

The controller 100 can sequentially designate letters corresponding to a position that is designated in a block until the drag motion is terminated. For example, as shown in FIG. 4C, if the drag motion is conducted to the right from a position where the drag first starts, the controller 100 can designate the letters 'Apple user', contained from a position where the drag first starts to a position 411 where the drag is terminated, in block 413. The controller 100 can display the letters 'Apple user' designated by the block 413 on a pop-up screen 415 on one side of the touch screen 110.

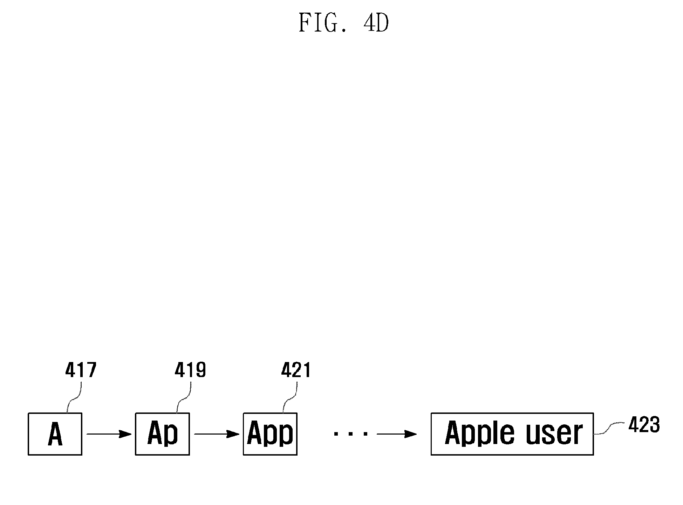

As shown in FIG. 4D, the process of designating a block is performed as follows. When a user's touch signal first occurs and then the drag motion is conducted to the right, the controller 100 designates letter 'A' in block 417 according to the direction and distance of the drag motion. When the drag motion is continuously being conducted to the right, the controller 100 designates the letters 'Ap' in block 419. When the drag motion is further continuously being conducted to the right, the controller 100 designates the letters 'App' in block 421. As this process continues, the controller 100 can finally designate the letters 'Apple user' in block 423 according to the drag motion. During these processes, the controller 100 can display the letters 'A', 'Ap', 'App',..., and 'Apple user' on the pop-up screen at one side of the touch screen 110. The pop-up screen can display letters simultaneously when the letters are designated, in a block, on the letter input window.

In an exemplary embodiment of the present invention, the controller 100 can display letters designated in a block on a translucent screen on an area where a user's touch has not occurred. The pop-up screen can be at least one of displayed on part of an area where the virtual keypad is displayed and overlaid on part of the letter input window.

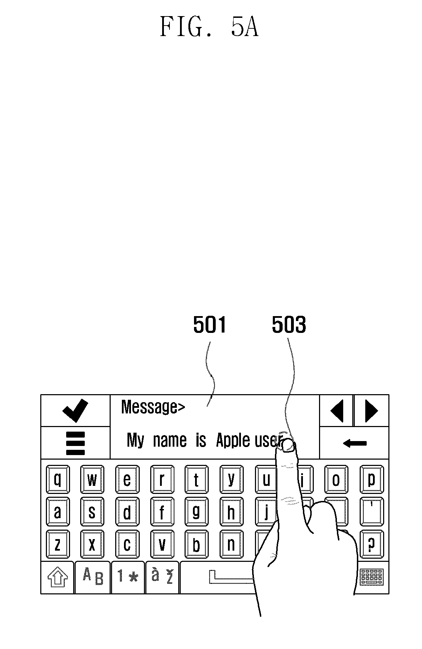

FIG. 5A to FIG. 5D are views of an operation for displaying a letter when a drag motion is conducted to the left on a touch screen of a terminal according to an exemplary embodiment of the present invention.

Referring to FIGs. 5A to 5D, it is assumed that a drag motion is conducted to the left from a position where a user's touch first occurred on the touch screen of the terminal.

As shown in FIG. 5A, the controller 100 displays a letter input window 501 according to an application for inputting letters via the touch screen 110. The controller 100 can sense a user's touch input to the letter input window 501. The controller 100 detects a position 503 where the user's touch occurred and identifies a corresponding letter.

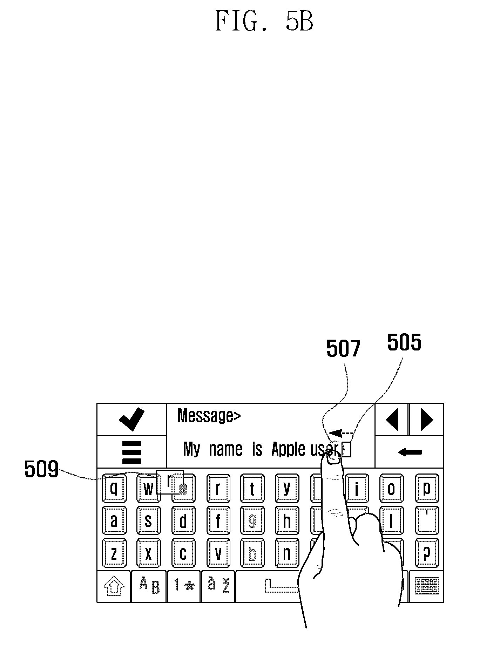

When the controller 100 detects the position where the user's touch occurred, it determines whether a drag motion occurs. If a drag motion has occurred, the controller 100 designates letters in a block according to the direction and distance of the drag motion. For example, as shown in FIG. 5B, if the controller 100 ascertains that a drag motion has occurred, it detects that the drag motion is conducted to the left from the position 403 where a user's touch has first occurred. Simultaneously, the controller 100 detects the distance of the drag motion and designates letter 'r', in block 505, according to the user's finger position 507 during the drag motion. The controller 100 can also display letter 'r' designated by the block 505 on a pop-up screen 509 on one side of the touch screen 110.

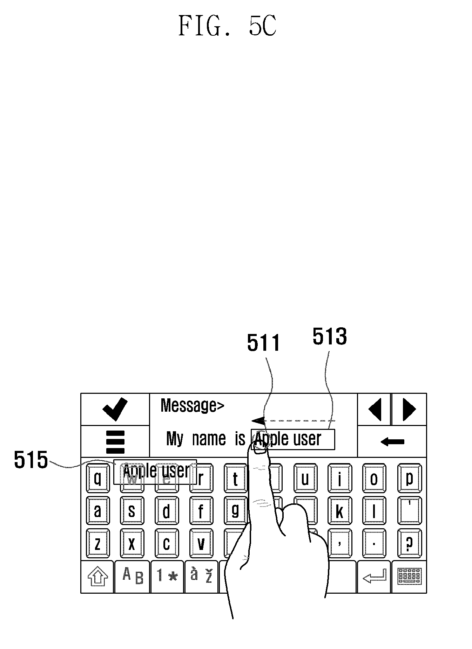

The controller 100 can sequentially designate letters corresponding to a position that is designated in a block until the drag motion is terminated. For example, as shown in FIG. 5C, if the drag motion is conducted to the left from a position where the drag first starts, the controller 100 can designate the letters 'Apple user', contained from a position where the drag first starts to a position 511 where the drag is terminated, in block 513. The controller 100 can display the letters 'Apple user' designated by the block 513 on a pop-up screen 515 on one side of the touch screen 110.

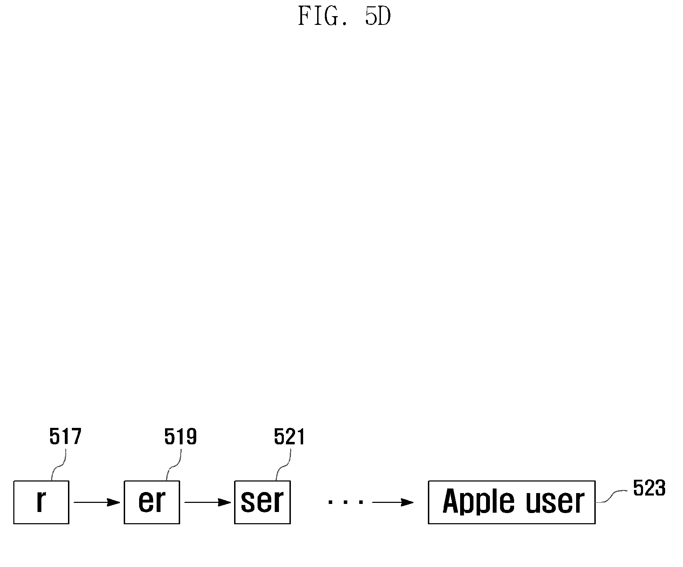

As shown in FIG. 5D, the process of designating a block is performed as follows. When a user's touch signal first occurs and then the drag motion is conducted to the left, the controller 100 designates letter 'r' in block 517 according to the direction and distance of the drag motion. When the drag motion is continuously being conducted to the left, the controller 100 designates the letters 'er' in block 519. When the drag motion is further continuously being conducted to the left, the controller 100 designates the letters 'ser' in block 521. As this process continues, the controller 100 completes the designation of the letters the 'Apple user' in block 523 according to the drag motion. During these processes, the controller 100 can display the letters 'r', 'er', 'ser',..., and 'Apple user' on the pop-up screen at one side of the touch screen 110. The pop-up screen can display letters simultaneously when the letters are designated, in a block, on the letter input window.

In an exemplary embodiment of the present invention, the controller 100 can display letters designated in a block on a translucent screen on an area where a user's touch has not occurred. The pop-up screen can be displayed on part of an area where the virtual keypad is displayed or can be overlaid on part of the letter input window.

As described above, the method and apparatus according to exemplary embodiments of the present invention can allow a user to recognize letters currently designated in a block, being displayed on the pop-up screen while the user is designating the letters in a block, when the user inputs letters in the terminal using a touch screen.

The method and apparatus can allow a user to recognize the letters, touched by the user's drag motion for a block, displayed on a pop-up screen overlaying an area that can display letters.

The method and apparatus can display a pop-up screen on part of a virtual keypad area.

Certain aspects of the present invention can also be embodied as computer program product including a computer readable recording medium, such as storage unit 120, having computer readable program code stored therein. A computer readable recording medium is any data storage device that can store data, such as computer readable program code, which can be thereafter read by an electronic processor, such as controller 100. Examples of the computer readable recording medium include Read-Only Memory (ROM), Random-Access Memory (RAM), CD-ROMs, magnetic tapes, floppy disks, and optical data storage devices. The computer readable recording medium can also be distributed over network coupled computer systems so that the computer readable program code is stored and executed in a distributed fashion. Also, functional programs, code, and code segments for accomplishing the present invention can be easily construed by programmers skilled in the art to which the present invention pertains.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for displaying letters on a touch screen of a terminal, the method comprising:
designating a region on the touch screen, in a block, according to a touch from a user; and
displaying at least one of letters and images, contained in the designated block, on an area in the touch screen, as a pop-up screen.

2. The method of claim 1, wherein the displaying of the at least one of the letters and images comprises:
displaying the pop-up screen on an area where the touch from the user has not occurred.

3. The method of claim 1, further comprising:
activating an application for inputting letters; and
displaying a virtual keypad for inputting letters, according to the activation of the application, and a window for displaying letters.

4. The method of claim 3, wherein the pop-up screen is at least one of translucently displayed and overlaid on at least one of part of an area where the virtual keypad is displayed and part of the window.

5. The method of claim 1, wherein the designation of the region comprises:
designating the block according to the direction and distance of a drag motion, from a position where the touch from the user has occurred on the touch screen.

6. The method of claim 1, further comprising:
determining whether a drag motion is terminated;
determining, if a drag motion is terminated, whether another touch from the user is input to the touch screen; and
releasing, if the other touch from the user has been input, the designated block and removing the pop-up screen.

7. An apparatus for displaying letters on a touch screen of a terminal, the apparatus comprising:
a touch screen, the touch screen including a display window for displaying a region designated in a block, as a pop-up screen, and a touch pad for detecting a drag motion according to a touch from a user; and
a controller for performing a control operation to display at least one of the letters and images, contained in the designated block, on an area in the touch screen, as the pop-up screen.

8. The apparatus of claim 7, wherein the controller displays the pop-up screen on an area where the touch from the user has not occurred.

9. The apparatus of claim 7, wherein the controller activates an application for inputting letters, and displays a virtual keypad for inputting letters and a window for displaying letters.

10. The apparatus of claim 9, wherein the controller at least one of translucently displays and overlays the pop-up screen on at least one of part of an area where the virtual keypad is displayed and part of the window.

11. The apparatus of claim 7, further comprising:
a block-generating unit for designating the block according to the direction and distance of a drag motion, from a position where the touch from the user has occurred on the touch screen.

12. The apparatus of claim 7, wherein the controller, if the drag motion is terminated, determines whether another touch from the user is input to the touch screen, and, if the other touch from the user has been input, releases the designated block and removes the pop-up screen.

13. A computer program product comprising a computer readable recording medium having computer readable program code stored therein for causing an electronic processor to display letters on a touch screen of a terminal, the computer readable program code comprising:
a first computer readable program code means causing the computer to display a virtual keypad for inputting letters and a window for displaying letters;
a second computer readable program code for causing the computer to designate a region on the touch screen, in a block, according to a touch from a user; and
a third computer readable program code for causing the computer to display at least one of letters and images, contained in the designated block, on an area in the touch screen, as a pop-up screen.

14. The computer program product of claim 13, wherein third computer readable program code comprises computer readable program code for causing the computer to display the pop-up screen on an area where the touch from the user has not occurred, and
the pop-up screen is at least one of translucently displayed and overlaid on at least one of part of an area where the virtual keypad is displayed and part of the window.

15. The computer program product of claim 13, wherein the control logic further comprises:
a fifth computer readable program code for causing the computer to determine whether a drag motion is terminated;
a sixth computer readable program code for causing the computer to determine, if a drag motion is terminated, whether another touch from the user is input to the touch screen; and
a seventh computer readable program code for causing the computer to release, if the other touch from the user has been input, the designated block and removing the pop-up screen.
